# EUROPÄISCHE PATENTANMELDUNG

(11) **EP 4 600 505 A1**
(43) Veröffentlichungstag der Anmeldung: **13.08.2025**
(21) Anmeldenummer: 24156925.0
(22) Anmeldetag: 09.02.2024
(51) Int. Cl.: F16B 5/01, B62D 33/04

(54) **VERFAHREN ZUR HERSTELLUNG EINES PANEELS MIT EINER KERNLAGE SOWIE PANEEL MIT KERNLAGE UND NUTZFAHRZEUG MIT PANEEL**

(71) Anmelder: Schmitz Cargobull AG, 48341 Altenberge (DE)
(72) Erfinder: RESING, Dirk, 46354 Südlohn (DE); BLECKMANN, Tobias, 46499 Vreden (DE)
(74) Vertreter: Cohausz & Florack

(57) **Zusammenfassung**

Beschrieben und dargestellt ist ein Verfahren zur Herstellung eines Paneels (10) eines Nutzfahrzeugs (1), insbesondere eines Lastkraftwagens, Anhängers oder Sattelaufliegers, umfassend eine innere strukturgebende Decklage (11), eine äußere strukturgebende Decklage (12) und eine zwischen der inneren Decklage (11) und der äußeren Decklage (12) vorgesehene Kernlage (13), wobei die Kernlage (13) wenigstens ein Matrixelement (18) aus einem thermoplastischen Kunststoff aufweist. Damit die Paneele und Nutzfahrzeuge einfacher und kostengünstiger gefertigt werden können ist vorgesehen, dass das wenigstens eine Matrixelement (18) wenigstens abschnittsweise erwärmt wird, dass der erwärmte Abschnitt des wenigstens einen Matrixelements (18) mit wenigstens einem Umformwerkzeug (21) thermisch umgeformt wird, dass im Wege des thermischen Umformens abschnittsweise wenigstens eine Sicke (24) mit gezielt verringerter Dicke (DS) des Matrixelements (18) im wenigstens einen Matrixelement (18) gebildet wird und dass das wenigstens eine thermisch umgeformte Matrixelement (18) mit der inneren strukturgebenden Decklage (11) und der äußeren strukturgebenden Decklage (12) verbunden wird.

## Beschreibung

Die Erfindung betrifft ein Verfahren zur Herstellung eines Paneels eines Nutzfahrzeugs, insbesondere eines Lastkraftwagens, Anhängers oder Sattelaufliegers umfassend eine innere strukturgebende Decklage, eine äußere strukturgebende Decklage und eine zwischen der inneren Decklage und der äußeren Decklage vorgesehenen Kernlage, wobei die Kernlage wenigstens ein Matrixelement aus einem thermoplastischen Kunststoff aufweist. Ferner umfasst die Erfindung ein Paneel eines Nutzfahrzeugs, insbesondere eines Lastkraftwagens, Anhängers oder Sattelaufliegers umfassend eine innere strukturgebende Decklage, eine äußere strukturgebende Decklage und eine zwischen der inneren Decklage und der äußeren Decklage vorgesehenen Kernlage, wobei die Kernlage wenigstens ein Matrixelement aus einem thermoplastischen Kunststoff aufweist. Zudem betrifft die Erfindung ein Nutzfahrzeug mit wenigstens einem Paneel der vorgenannten Art.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen. Unter Lastkraftwagen können vorliegend solche verstanden werden, die selbst angetrieben sind und eine Fahrerkabine ebenso aufweisen wie einen Nutzfahrzeugaufbau zur Aufnahme der Ladung. Es kommen aber auch Lastkraftwagen dieser oder einer anderen Art in Frage, die mit einem Anhänger betrieben werden, wobei der Lastkraftwagen in einem solchen Gespann, das auch als Lastzug bekannt ist, als Motorwagen bezeichnet werden.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder Kernlagen mit einem hohen Luftanteil können für ein hohes Maß an thermischer Isolation des Laderaums sorgen. Entsprechende Nutzfahrzeugaufbauten werden daher zweckmäßig für Kühltransporte eingesetzt. Um den Laderaum zu kühlen, weisen diese Nutzfahrzeuge typischerweise Transportkältemaschinen auf, die an der Stirnwand des Nutzfahrzeugaufbaus montiert sind, Luft aus dem Laderaum ansaugen, die angesaugte Luft kühlen und die gekühlte Luft anschließend wieder in den Laderaum zurückblasen.

Ferner sind Nutzfahrzeugaufbauten mit Paneelen bekannt, bei denen zwischen der inneren Decklage und der äußeren Decklage eine Kernlage aus einem Matrixelement in Form einer Wabenstruktur aus einem thermoplastischen Kunststoff vorgesehen ist. In den Waben der Wabenstruktur der Kernlage ist Luft eingeschlossen, wodurch eine hohe thermische Isolation bereitgestellt werden kann.

Die Herstellung von Paneelen mit entsprechenden Matrixelementen ist jedoch verhältnismäßig aufwendig und kostenintensiv.

Daher liegt der vorliegenden Erfindung die Aufgabe zugrunde, das Verfahren, das Paneel und das Nutzfahrzeug jeweils der eingangs genannten und zuvor näher beschriebenen Art derart auszugestalten und weiterzubilden, dass die Paneele und Nutzfahrzeuge einfacher und kostengünstiger gefertigt werden können.

Diese Aufgabe ist gemäß Anspruch 1 gelöst durch ein Verfahren zur Herstellung eines Paneels eines Nutzfahrzeugs, insbesondere eines Lastkraftwagens, Anhängers oder Sattelaufliegers, insbesondere nach einem der Ansprüche 10 bis 15, umfassend eine innere strukturgebende Decklage, eine äußere strukturgebende Decklage und eine zwischen der inneren Decklage und der äußeren Decklage vorgesehene Kernlage, wobei die Kernlage wenigstens ein Matrixelement aus einem thermoplastischen Kunststoff aufweist,
- bei dem das wenigstens eine Matrixelement wenigstens abschnittsweise erwärmt wird,
- bei dem der erwärmte Abschnitt des wenigstens einen Matrixelements mit wenigstens einem Umformwerkzeug thermisch umgeformt wird,
- bei dem im Wege des thermischen Umformens abschnittsweise wenigstens eine Sicke mit gezielt verringerter Dicke des Matrixelements im wenigstens einen Matrixelement gebildet wird und
- bei dem das wenigstens eine thermisch umgeformte Matrixelement mit der inneren strukturgebenden Decklage und der äußeren strukturgebenden Decklage verbunden wird.

Die genannte Aufgabe ist ferner bei einem Paneel nach dem Oberbegriff des Anspruchs 10 dadurch gelöst, dass das wenigstens eine Matrixelement abschnittsweise wenigstens eine im Wege des thermischen Umformens gebildete Sicke mit einer verringerten Dicke des Matrixelements gegenüber den nicht thermisch umgeformten Bereichen des wenigstens einen Matrixelements aufweist.

Im Übrigen ist die zuvor genannte Aufgabe bei einem Nutzfahrzeug, insbesondere Lastkraftwagen, Anhänger oder Sattelauflieger dadurch gelöst, dass ein Paneel nach einem der Ansprüche 10 bis 15 vorgesehen ist.

Verfahrensmäßig wird das wenigstens eine Matrixelement der Kernlage zunächst wenigstens abschnittsweise erwärmt, um es sodann im Bereich des erwärmten Abschnitts des Matrixelements mit einem Umformwerkzeug thermisch umzuformen. Dabei erfolgt das thermische Umformen derart, dass in dem wenigstens einen erwärmten Abschnitt des wenigstens einen Matrixelements eine Sicke erzeugt wird. Die Sicke kann beispielsweise als eine Rinne oder ein offener Kanal ausgebildet sein. Die Sicke entsteht dabei in dem die Dicke des wenigstens einen Matrixelements abschnittsweise thermisch reduziert wird. Es wird dabei das Material der Sicke nicht entfernt, sondern es wird in den an die Sicke angrenzenden Bereich des Matrixelements verdrängt, so dass das verdrängte Material des Matrixelements die Sicke freigibt und bildet. Dabei wird die Sicke ferner derart erzeugt, dass die Dicke des Matrixelements im Bereich der Sicke gezielt verringert wird. Auf diese Weise wird ein Matrixelement erhalten was, möglichst genau, in den Zwischenraum zwischen der inneren Decklage und der äußeren Decklage passt, ohne in aufwendiger und kostenintensiver Weise die Form der inneren Decklage und der äußeren Decklage anpassen zu müssen. Daher kann das wenigstens eine thermisch umgeformte Matrixelement in einfacher und kostengünstiger Weise mit der inneren strukturgebenden Decklage und der äußeren strukturgebenden Decklage verbunden werden.

Es wird mithin ein Paneel bereitgestellt, bei dem das wenigstens eine Matrixelement abschnittsweise wenigstens eine im Wege des thermischen Umformens gebildete Sicke mit einer verringerten Dicke des Matrixelements gegenüber den nicht thermisch umgeformten Bereichen des wenigstens einen Matrixelements aufweist, wobei dieses wenigstens eine Matrixelement zwischen der inneren Decklage und der äußeren Decklage angeordnet ist.

In diesem Zusammenhang wird die bezogen auf das Nutzfahrzeug innen vorgesehene, insbesondere an einen Laderaum eines Nutzfahrzeugaufbaus des Nutzfahrzeugs grenzende, Decklage als die innere Decklage angesehen. Die bezogen auf das Nutzfahrzeug außen vorgesehene, insbesondere eine Außenseite eines Nutzfahrzeugaufbaus bildende, Decklage wird dagegen als die äußere Decklage bezeichnet, um die beiden an den Außenseiten der Kernlage vorgesehenen Decklagen voneinander unterscheiden zu können.

Bei einer ersten besonders bevorzugten Ausgestaltung des Verfahrens wird die wenigstens eine Sicke mit einer gegenüber den nicht thermisch umgeformten Bereichen des wenigstens einen Matrixelements um wenigstens 10%, vorzugsweise um wenigstens 15%, insbesondere um wenigstens 20%, verringerten Dicke gebildet. Die Tiefe der Sicke und damit die thermische Dickenreduktion des wenigstens einen Matrixelements kann gezielt an die mit der Kernlage zu verbindenden inneren und äußeren Decklagen angepasst werden, wobei grundsätzlich eine größere Dickenreduktion die konstruktiven Freiheiten hinsichtlich der zu verwendenden Decklagen vergrößert. Gleichzeitig kann es aus Gründen der thermischen Isolation der Paneele wünschenswert sein, wenn die Sicken nicht zu tief und damit die thermische Dickenreduktionen nicht zu ausgeprägt sind. Aus diesem Grund bietet es sich alternativ oder zusätzlich an, wenn die wenigstens eine Sicke mit einer gegenüber den nicht thermisch umgeformten Bereichen des wenigstens einen Matrixelements um weniger als 50%, vorzugsweise um weniger als 40%, insbesondere um weniger als 30% verringerten Dicke gebildet wird.

Zur Verringerung des verfahrensmäßigen und apparativen Aufwands kann das wenigstens eine Matrixelement abschnittsweise mit einem Heizwerkzeug erwärmt werden, indem das wenigstens eine Heizwerkzeug und das wenigstens eine Matrixelement relativ zueinander bewegt werden, und zwar in eine Richtung wenigstens im Wesentlichen parallel zum wenigstens einen Matrixelement. Das wenigstens eine Matrixelement und das wenigstens eine Heizelement werden dann relativ zueinander aneinander vorbeibewegt. Dabei kann das wenigstens eine Matrixelement, das wenigstens eine Heizelement oder das Matrixelement und das Heizelement bewegt werden. Das Heizelement kann dabei beispielsweise ein Heizgebläse sein.

Zum abschnittsweisen thermischen Umformen des wenigstens einen Matrixelements kann ein entsprechend ausgebildetes Umformwerkzeug verwendet werden. Dabei bietet es sich alternativ oder zusätzlich auch hier an, wenn das wenigstens eine Matrixelement und wenigstens eine Umformwerkzeug in einer Richtung wenigstens im Wesentlichen parallel zum wenigstens einen Matrixelement relativ zueinander bewegt werden. Das wenigstens eine Matrixelement und das wenigstens eine Umformwerkzeug werden dann relativ zueinander aneinander vorbeibewegt. Dabei kann das Matrixelement, das Umformwerkzeug oder das Matrixelement und das Umformwerkzeug bewegt werden. Beispielsweise kann es sich bei dem Umformwerkzeug um wenigstens eine Rolle handeln, welche beim Abrollen über das wenigstens eine Matrixelement eine Sicke in das Matrixelement einformt.

Besonders einfach, schnell und zuverlässig kann es sein, wenn das wenigstens eine Heizwerkzeug vom wenigstens einen Umformwerkzeug umfasst ist. Dann kann über das Umformwerkzeug sowohl das Erwärmen des wenigstens einen Matrixelements als auch das Umformen des wenigstens einen Matrixelements bewirkt werden. Im Falle eines Umformwerkzeugs in Form einer Rolle kann diese direkt über das Heizwerkzeug beheizt werden, so dass die Rolle die Wärme an das Matrixelement abgibt.

Sehr genau und zuverlässig lässt sich die Sicke mit der gewünschten Form und Tiefe in das wenigstens eine Matrixelement einbringen, wenn zum Bilden der wenigstens einen Sicke im wenigstens einen Matrixelement ein Umformwerkzeug mit einem Umformbereich verwendet wird, der einen Querschnitt, insbesondere senkrecht zur Richtung der relativen Bewegung zwischen Matrixelement und Umformwerkzeug, aufweist, welcher korrespondierend zum Querschnitt der Sicke ausgebildet ist.

Zudem kann es sich anbieten, wenn das Umformwerkzeug zum thermischen Umformen des wenigstens einen Matrixelements beheizt wird und das wenigstens eine Matrixelement, vorzugsweise ausschließlich, zum thermischen Umformen durch das Umformwerkzeug erwärmt wird.

Das wenigstens eine thermisch umgeformte Matrixelement kann nach dem Umformen mit der inneren Decklage und/oder der äußeren Decklage verbunden werden. Dies erfolgt vorzugsweise so, dass die innere Decklage und/oder die äußere Decklage mit wenigstens einem Montageelement in die wenigstens eine Sicke des wenigstens einen Matrixelements eingreift. Auf diese Weise kann das Montageelement zweckmäßig im Paneel aufgenommen werden, ohne dass das Montageelement nach außen überstehen muss und dort der Gefahr einer Beschädigung ausgesetzt wird. Dabei bietet es sich für die Montage des Paneels besonders an, wenn das wenigstens eine Montageelement rippenförmig ausgebildet ist, etwa um die innere Decklage und/oder die äußere Decklage aus verschiedenen Bauteilen zusammensetzen zu können.

Aus Gründen der Stabilität kann es sich dabei weiter anbieten, wenn die wenigstens eine Sicke des Matrixelements durch die innere Decklage und/oder die äußere Decklage wenigstens im Wesentlichen ausgefüllt wird. Dies bedeutet nicht, dass das Montageelement einen Montageabschnitt mit einem Querschnitt aufweisen muss, der mit dem Querschnitt der Sicke korrespondiert. Es reicht dabei vielmehr aus, wenn das Montageelement einen Montageabschnitt mit einer Außenkontur aufweist, die der Innenkontur der Sicke entspricht. Dann liegt der Montageabschnitt mit seiner äußeren Kontur vorzugsweise durchgängig an der Innenkontur der Sicke an.

Bedarfsweise erfolgt dies indirekt, etwa wenn zwischen der Sicke und dem Montageabschnitt ein Klebstoff vorgesehen wird.

Das Montageelement kann dabei ganz grundsätzlich dazu dienen, die innere Decklage und/oder die äußere Decklage aus mehreren überwiegend flächigen Decklagenelementen zusammenzusetzen. Dies vereinfacht die Fertigung der Paneele, da weniger große Bauteile gehandhabt werden müssen. Entsprechende Vorteile lassen sich alternativ oder zusätzlich auch dadurch erreichen, dass die Kernlage aus mehreren Matrixelementen zusammengesetzt ist, wobei dann insbesondere die Decklagenelemente und die Matrixelemente eine zueinander korrespondierende Größe aufweisen können.

Im Falle von mehreren flächigen Decklagenelementen bietet es sich der Einfachheit halber an, wenn zu deren Verbindung untereinander eine Spange verwendet wird. Diese kann dann insbesondere in einem Verbindungsbereich von aneinander angrenzenden Decklagenelementen die Decklagenelemente teilweise überdecken. Die Spange überdeckt dann auch den Verbindungsbereich und kann von außen in dem Verbindungsbereich in Montageelemente der aneinander angrenzenden Decklagenelemente eingesetzt werden, wobei die Montageelemente der Decklagenelemente den entsprechenden Verbindungbereichen zugeordnet sind. Es können so also nicht nur Montageelemente in den Sicken des wenigstens einen Matrixelements aufgenommen werden, sondern zusätzlich auch Teile der Spange zum Verbinden der Decklagenelemente miteinander.

Insbesondere für den Fall, dass die innere Decklage und/oder die äußere Decklage aus mehreren flächigen Decklagenelementen zusammengesetzt ist, kann es sich anbieten, wenn die Dicke des wenigstens einen Matrixelements durch thermisches Umformen des Matrixelements entlang einer sich wenigstens im Wesentlichen über die gesamte Längserstreckung des Matrixelements erstreckenden Sicke verringert wird. Dann kann beispielsweise die zuvor beschriebene Verbindung der Decklagenelemente untereinander wenigstens im Wesentlichen entlang der gesamten Längserstreckung des Matrixelements vorgesehen werden, wobei die Längserstreckung des Matrixelements wenigstens im Wesentlichen gleichbedeutend sein kann, mit der Höhe oder der Breite des zu bildenden Paneels. Mit anderen Worten kann zur Verbindung von separaten Decklagenelementen über wenigstens im Wesentlichen die gesamte Längserstreckung des Matrixelements ein Montageelement der inneren Decklage und/oder der äußeren Decklage in die Sicke eingesetzt werden.

Das Paneel kann einfach und zuverlässig gebildet werden, wenn das wenigstens eine thermisch umgeformte Matrixelement mit der inneren Decklage und/oder der äußeren Decklage verklebt wird. Das gilt in besonderem Maße, wenn die innere Decklage und/oder die äußere Decklage direkt über jeweils eine Klebstoffschicht mit dem wenigstens einen Matrixelement verklebt werden.

Besonders leicht und stabil kann das Paneel ausgebildet werden, wenn ein Matrixelement mit einer Wabenstruktur verwendet wird, das eine Vielzahl von in einer Richtung wenigstens im Wesentlichen senkrecht zur inneren Decklage und/oder zur äußeren Decklage ausgerichtete Waben umfassen kann. Die Waben können zu einer weiteren, materialschonenden Aussteifung des Paneels sorgen, wenn die Waben einen sechseckigen, hohlen und mit Luft gefüllten Querschnitt aufweisen.

Alternativ oder zusätzlich wird eine gute thermische Umformbarkeit bei günstigen mechanischen Eigenschaften bereitgestellt, wenn das wenigstens eine Matrixelement wenigstens im Wesentlichen aus Polypropylen (PP) oder Polyethylenterephthalat (PET) gebildet ist.

Die innere Decklage, die äußere Decklage, insbesondere die Decklagenelemente und/oder die Spangen können zur Bildung einer geeigneten strukturgebenden Decklage aus Stahl oder Aluminium ausgebildet sein. Besonders bevorzugt ist es dabei, wenn die innere und/oder die äußere Decklage aus Stahlblech gebildet wird.

Bei einer ersten besonders bevorzugten Ausgestaltung des Paneels greift ein Montageelement der inneren Decklage und/oder der äußeren Decklage in die wenigstens eine Sicke des Matrixelements ein. So kann eine feste und dauerhafte innere und/oder äußere Decklage gebildet und gleichzeitig ein ebene innere und/oder äußere Decklage bereitgestellt werden. Eine besonders zuverlässige und stabile Verbindung zur Bildung der inneren und/oder äußeren Decklage kann erhalten werden, wenn es sich bei dem wenigstens einen Montageelement um ein rippenförmiges Montageelement handelt. Der Stabilität des Paneels, insbesondere der Verbindung von Teilen der inneren und/oder der äußeren Decklage, ist es zuträglich, wenn die wenigstens eine Sicke des Matrixelements durch die innere Decklage und/oder die äußere Decklage wenigstens im Wesentlichen ausgefüllt wird. Ein Ausfüllen erfordert jedoch nicht, dass das Montageelement einen Montageabschnitt mit einem Querschnitt aufweisen muss, der mit dem Querschnitt der Sicke korrespondiert. Es reicht dabei vielmehr aus, wenn das Montageelement einen Montageabschnitt mit einer Außenkontur aufweist, die der Innenkontur der Sicke entspricht. Dann liegt der Montageabschnitt mit seiner äußeren Kontur vorzugsweise durchgängig an der Innenkontur der Sicke an. Bedarfsweise erfolgt dies indirekt, etwa wenn zwischen der Sicke und dem Montageabschnitt ein Klebstoff vorgesehen wird.

Die Fertigung des Paneels kann vereinfacht werden, wenn die innere Decklage und/oder die äußere Decklage aus mehreren überwiegend flächigen Decklagenelementen zusammengesetzt ist. Diese Decklagenelemente sind einfacher zu handhaben als die gesamte innere Decklage und/oder äußere Decklage. Um die Decklagenelemente zweckmäßig miteinander zu einer inneren Decklage und/oder einer äußeren Decklage verbinden zu können, kann wenigstens eine den Verbindungsbereich aneinander angrenzender Decklagenelemente überdeckende Spange von außen in die dem Verbindungsbereich zugeordneten Montagelemente der aneinander angrenzenden Decklagenelemente eingesetzt sein. So kann eine wenigstens im Wesentlichen ebene innere und/oder äußere Decklage geschaffen werden.

Eine feste und dauerhafte Verbindung der Kernlage mit der inneren Decklage und/oder der äußeren Decklage kann geschaffen werden, wenn das wenigstens eine Matrixelement mit der inneren Decklage und/oder der äußeren Decklage verklebt wird. Dies kann insbesondere direkt und/oder über eine Klebstoffschicht erfolgen. Alternativ oder zusätzlich können die aneinander angrenzenden Decklagenelemente wenigstens der inneren Decklage und/oder der äußeren Decklage abschnittsweise mit wenigstens einer Spange verbunden sein, wobei die Spange mit den entsprechenden Decklagenelementen verklebt sein kann. Auch dies kann zum Zwecke einer festen und dauerhaften Verbindung direkt und/oder über eine Klebstoffschicht erfolgen.

Ein zweckmäßiger Kompromiss zwischen einer guten Wärmedämmung und einem stabilen und langlebigen Paneel kann geschaffen werden, wenn die Sicke hinreichend viel Raum zur Aufnahme eines Montageelementes und bedarfsweise eines Teils einer Spange bereitstellt aber gleichzeitig keine nennenswerte Kältebrücke bildet. Daher bietet es sich grundsätzlich an, wenn die wenigstens eine Sicke mit einer gegenüber den nicht thermisch umgeformten Bereichen des wenigstens einen Matrixelements eine um wenigstens 10%, vorzugsweise um wenigstens 15%, insbesondere um wenigstens 20%, verringerte Dicke aufweist. Ebenso bietet es sich an, wenn die wenigstens eine Sicke mit einer gegenüber den nicht thermisch umgeformten Bereichen des wenigstens einen Matrixelements eine um weniger als 50%, vorzugsweise um weniger als 40%, insbesondere um weniger als 30%, verringerte Dicke aufweist.

Um Matrixelemente und/oder Decklagenelemente der inneren und/oder der äußeren Decklage einfach über die gesamte Höhe oder Breite des Paneels miteinander verbinden zu können, kann die wenigstens eine Sicke wenigstens im Wesentlichen über die gesamte Höhe oder Breite des Paneels vorgesehen sein. Alternativ oder zusätzlich kann aus demselben Grund das wenigstens eine Montageelement der inneren Decklage und/oder der äußeren Decklage wenigstens im Wesentlichen über die gesamte Höhe oder Breite des Paneels vorgesehen sein. Im Falle eines Seitenwandpaneels bietet sich es sich an, von der Höhe des Paneels zu sprechen, während es sich bei einem Dach anbieten kann, von der Breite des Paneels zu sprechen. Wenn es sich bei dem Nutzfahrzeug um einen Sattelauflieger handelt, wird es sich bevorzugt in beiden Fällen um die Querrichtung bezogen auf das Paneel handeln, da die entsprechenden Paneele viel länger sind als hoch bzw. breit.

Der Steifigkeit und der Leichtigkeit wegen, kann das wenigstens eine Matrixelement eine Wabenstruktur mit einer Vielzahl von Waben bilden. Dies gilt umso mehr, wenn die Waben sechseckig sind und/oder sich in einer Richtung wenigstens im Wesentlichen senkrecht zur inneren Decklage und/oder zur äußeren Decklage erstrecken. Alternativ oder zusätzlich lässt sich das thermische Umformen erleichtern, ohne nennenswerte Einschränkungen hinsichtlich der mechanischen Eigenschaften in Kauf nehmen zu müssen, wenn das wenigstens eine Matrixelement wenigstens im Wesentlichen aus Polypropylen (PP) oder aus Polyethylenterephthalat (PET) gebildet ist. Die innere Decklage, die äußere Decklage, insbesondere die Decklagenelemente und/oder die Spangen können zur Bildung einer geeigneten strukturgebenden Decklage aus Stahl oder Aluminium ausgebildet sein. Besonders bevorzugt ist es dabei, wenn die innere und/oder die äußere Decklage aus Stahlblech gebildet wird.

Nachfolgend wird die Erfindung anhand einer lediglich Ausführungsbeispiele darstellenden Zeichnung näher erläutert. In der Zeichnung zeigt
- Fig. 1: ein von einem Zugfahrzeug gezogenes, erfindungsgemäßes Nutzfahrzeug mit erfindungsgemäßen Paneelen in einer perspektivischen Ansicht,
- Fig. 2: ein erfindungsgemäßes Paneel aus Fig. 1 in einer perspektivischen Ansicht,
- Fig. 3: das Paneel der Fig. 2 in einer schematischen Schnittansicht und
- Fig. 4A-C: Schritte bei der Herstellung des Paneels aus Fig. 2 nach einem erfindungsgemäßen Verfahren.

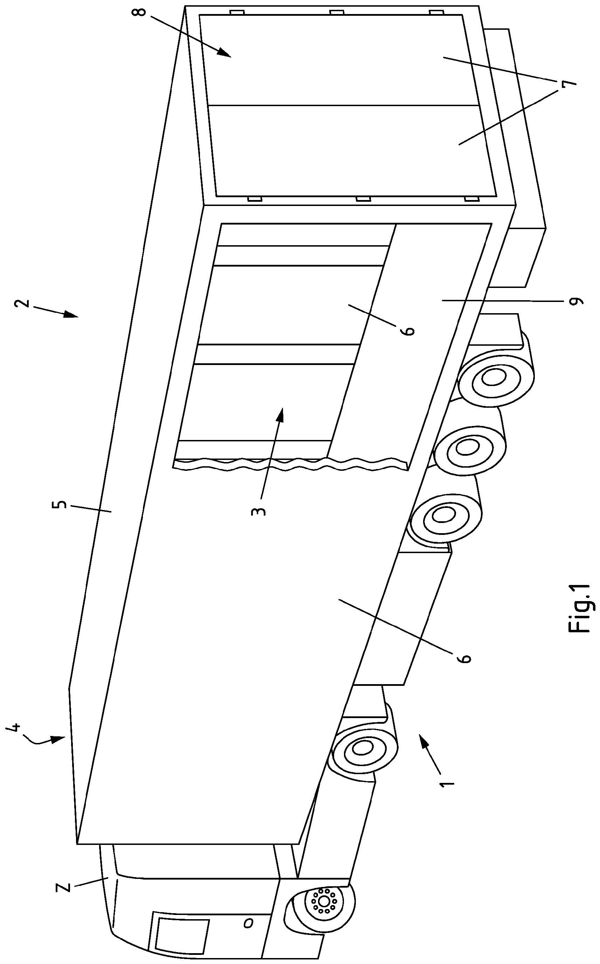

In der Fig. 1 ist ein Nutzfahrzeug 1 in Form eines Sattelaufliegers mit einem Kofferaufbau 2 dargestellt, das von einer Zugmaschine Z gezogen wird. Der Kofferaufbau 2 des Nutzfahrzeugs 1 umschließt einen Laderaum 3 und umfasst eine feste Stirnwand 4, ein festes Dach 5, feste Seitenwände 6 und eine durch Flügeltüren 7 verschlossene Rückwand 8. Nach unten wird der Laderaum 3 durch einen Ladeboden 9 zum Aufstellen von Ladung begrenzt. Das Dach 5, die Stirnwand 4 und die Seitenwände 6 werden jeweils durch ein Paneel gebildet, wobei die entsprechenden Paneele bei dem dargestellten und insoweit bevorzugten Nutzfahrzeug baugleich ausgebildet sind.

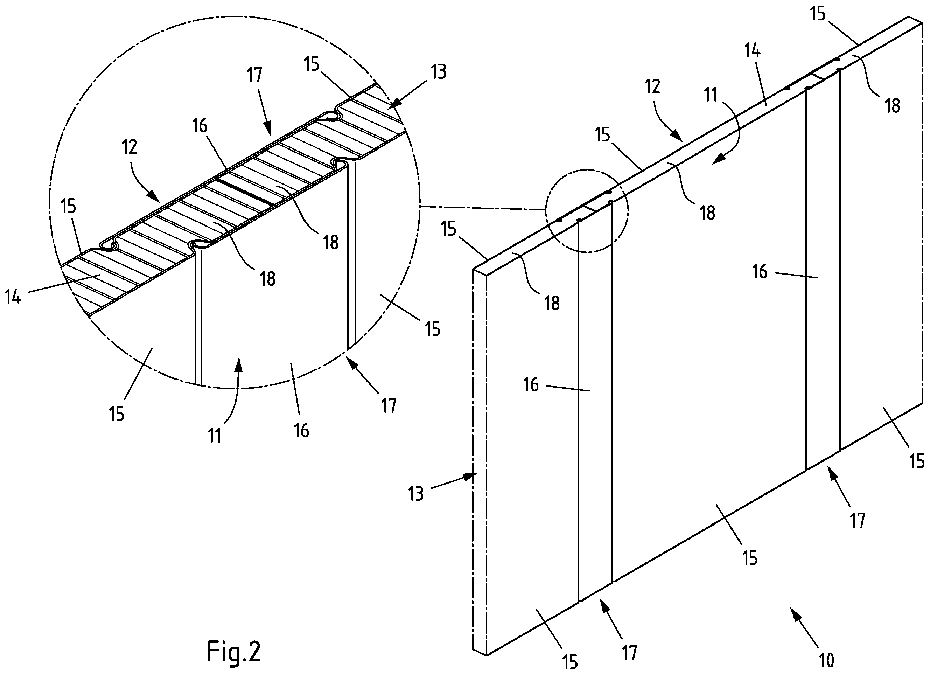

Ein solches Paneel 10 ist exemplarisch in der Fig. 2 dargestellt. Das Paneel 10 umfasst eine zum Laderaum 3 weisende, innere Decklage 11 und eine vom Laderaum 3 weg nach außen weisende äußere Decklage 12. Zwischen der inneren Decklage 11 und der äußeren Decklage 12 ist eine Kernlage 13 vorgesehen, die eine Luft einschließende Matrixstruktur 14 aus einem thermoplastischen Kunststoff wie Polypropylen (PP) oder Polyethylenterephthalat (PET) bildet. Die innere Decklage 11 und die äußere Decklage 12 werden wenigstens im Wesentlichen aus Decklagenelementen 15 gebildet, die über Spangen 16 im Verbindungsbereich 17 der Decklagenelemente 15 zur inneren Decklage 11 oder äußeren Decklage 12 verbunden sind. Den einzelnen Decklagenelementen 15 sind bei dem dargestellten und insoweit bevorzugten Nutzfahrzeug 1 jeweils korrespondierend ausgebildete Matrixelemente 18 zugeordnet, die zusammen zur Matrixstruktur 14 der Kernlage 13 zusammengesetzt werden. Die Decklagenelemente 15 und die Spangen 16 sind bei dem dargestellten und insoweit bevorzugten Paneel 10 aus Stahlblech gebildet.

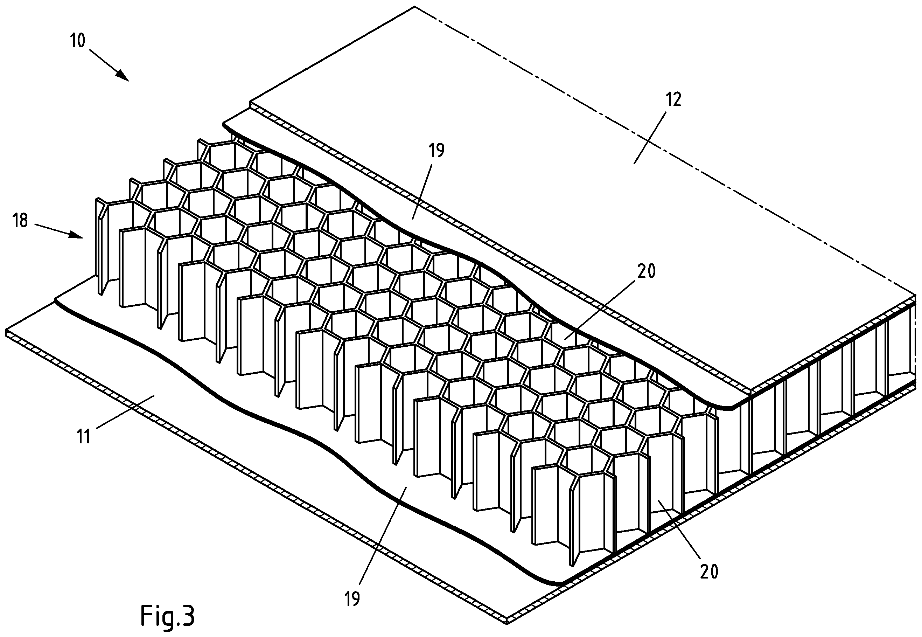

In der Fig. 3 ist eine schematische Schnittansicht des Paneels 10 aus Fig. 2 dargestellt, das auf der inneren Decklage 11 des Paneels 10 liegt. Zwischen der innere Decklage 11 und dem Matrixelement 18 ist eine Klebstoffschicht 19 vorgesehen, welche die innere Decklage 11 vollflächig mit dem Matrixelement 18 verbindet. Auf der gegenüberliegenden Seite des Matrixelements 18 ist das Matrixelement 18 über eine vollflächig aufgetragene Klebstoffschicht 19 mit der äußeren Decklage 12 verklebt. Das Matrixelement 18 weist eine Vielzahl von sechseckigen Waben 20 auf, welche die Matrixstruktur 14, in diesem Falle in Form einer Wabenstruktur, bildet. In denen Waben 20 ist Luft vorgesehen und die Waben 20 sind wenigstens im Wesentlichen senkrecht zur inneren Decklage 11 und zur äußeren Decklage 12 ausgerichtet. Die innere Decklage 11 und die äußere Decklage 12 sind wenigstens im Wesentlichen parallel zueinander ausgerichtet.

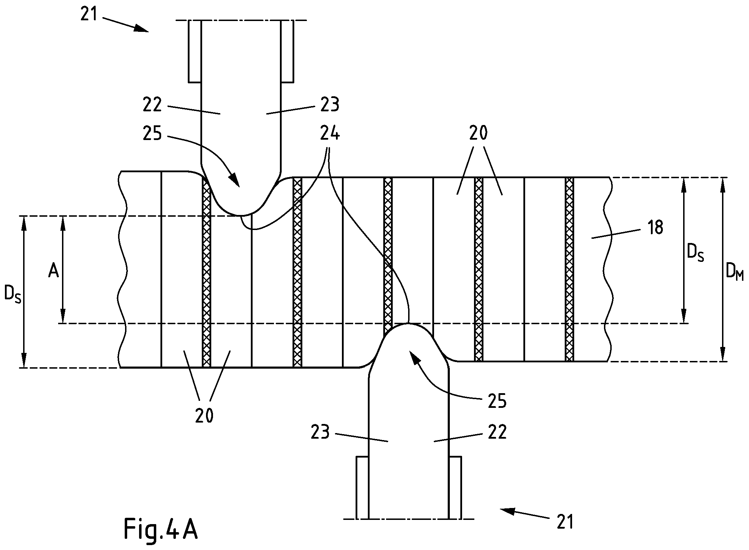

In den Fig. 4A-C ist das Paneel 10 der Fig. 2 während unterschiedlicher Schritte bei der Herstellung des Paneels 10 dargestellt. In der Fig. 4A ist eines von mehreren Matrixelementen 18 in einem Querschnitt dargestellt, die in Längsrichtung des Paneels 10 nebeneinander angeordnet werden, um die Kernlage 13 zu bilden. Das Matrixelement 18 wird mittels eines Umformwerkzeugs 21 thermisch umgeformt, das gegenüberliegenden Seiten zugeordnete Rollen 22 umfasst. In die Rollen 22 ist jeweils ein Heizwerkzeug 23 integriert, das die Rollen 22 auf einer gewünschten Temperatur hält. Der Abstand A der Rollen 22 zur gegenüberliegenden Seite des Matrixelements 18 ist geringer als die Dicke D_{M} des mit dem Umformwerkzeug 21 thermisch umzuformenden Matrixelements 18. Die Rollen 22 erwärmen das Matrixelement 18 in dem Bereich, in dem die Rollen 22 mit dem Matrixelement 18 in Kontakt kommen. Gleichzeitig wird der erwärmte Bereich des Matrixelements 18 durch die Rollen 22 teilweise thermisch umgeformt. Die Rollen 22 drücken dabei in das Matrixelement 18 hinein. Dabei wird Material des Matrixelements 18 verdrängt und eine Sicke 24 ausgebildet, deren Querschnitt dem Querschnitt des in das Matrixelement 18 eindrückenden Umformbereichs 25 der Rollen 22 entspricht. Die Rollen 22 werden in einer Richtung parallel zum Matrixelement 18 und senkrecht zur Schnittebene relativ zum Matrixelement 18 bewegt. Dabei rollen die Rollen 22 entlang des Matrixelements 18 in einer Richtung ab, welche der Breite oder der Höhe des späteren Paneels 10 entspricht, abhängig davon, ob es sich bei dem späteren Paneel 10 um eine Stirnwand 4, eine Seitenwand 6 oder um ein Dach 5 handelt. Bei dem dargestellten und insoweit bevorzugten Verfahren wird die Sicke 24 mit dem Umformwerkzeug 21 über die gesamte Längserstreckung des Matrixelements 18 in das Matrixelement 18 eingebracht. Bei dem dargestellten und insoweit bevorzugten Verfahren wird an beiden gegenüberliegenden Längsrändern des Matrixelements 18 jeweils eine Sicke 24 vorgesehen. Im Bereich der Sicke 24 ist die Dicke Ds des Matrixelements 18 gegenüber der Dicke D_{M} des nicht thermisch umgeformten Teils des Matrixelements 18 um etwa 25% verringert.

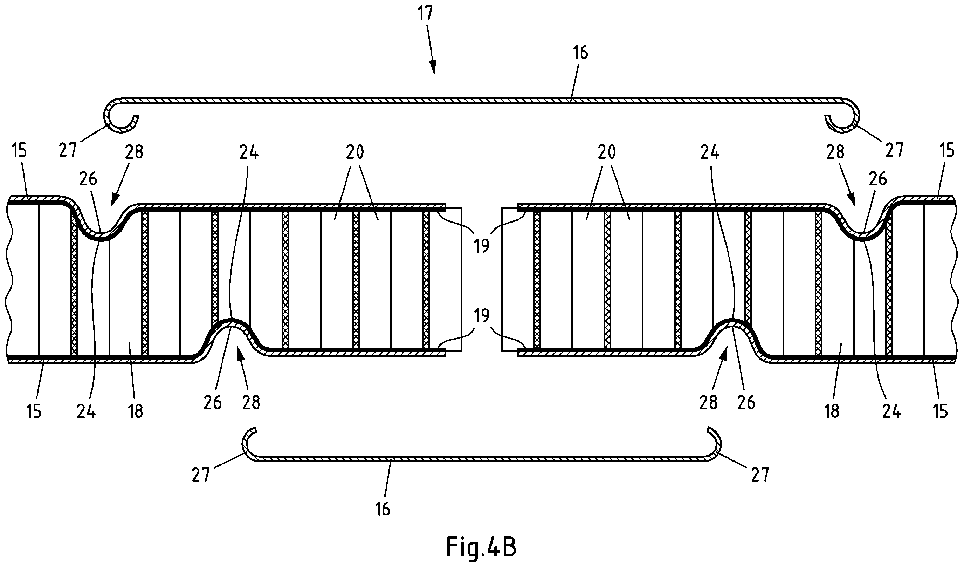

Anschließend wird das Matrixelement 18, in das im Wege des thermischen Umformens Sicken 24 eingebracht worden sind, beidseitig mit einem Decklagenelement 15 der inneren Decklage 11 und der äußeren Decklage 12 verklebt, wie dies in der Fig. 4B dargestellt ist. Dabei greifen Montageelemente 26 der Decklagenelemente 15 in die Sicken 24 ein. Bei dem dargestellten und insoweit bevorzugten Paneel 10 liegen die Montageelemente 26 im Wesentlichen vollflächig an den Konturen der Sicken 24 an. Die Montagelemente 26 und die Sicken 24 sind lediglich durch die Klebstoffschicht 19 zwischen dem Matrixelement 18 und dem Decklagenelement 15 voneinander getrennt. Dies erfolgt bei dem dargestellten und insoweit bevorzugten Verfahren mit all den Matrixelementen 18 eines Paneels 10, und zwar bedarfsweise unabhängig voneinander. Die einzelnen Matrixelemente 18 können beispielsweise nacheinander in der beschriebenen Weise mit Decklagenelementen 15 der inneren Decklage 11 und der äußeren Decklage 12 verbunden werden. Die einzelnen mit den Decklagenelementen 15 verbundenen Matrixelemente 18 werden dann mit ihren Querrändern in der Längsrichtung des Paneels in Anlage aneinander gebracht und über Spangen 16 von gegenüberliegenden Seiten des Verbindungsbereichs 17 miteinander verbunden. Die Spangen 16 greifen dabei mit randseitigen Verbindungselementen 27 in Aussparungen 28 in den Montageelementen 26 ein und werden dort über Klebstoffschichten 29 mit den Decklagenelementen 15, und vorzugsweise auch mit den Montageelementen 26 der Decklagenelemente 15, verklebt.

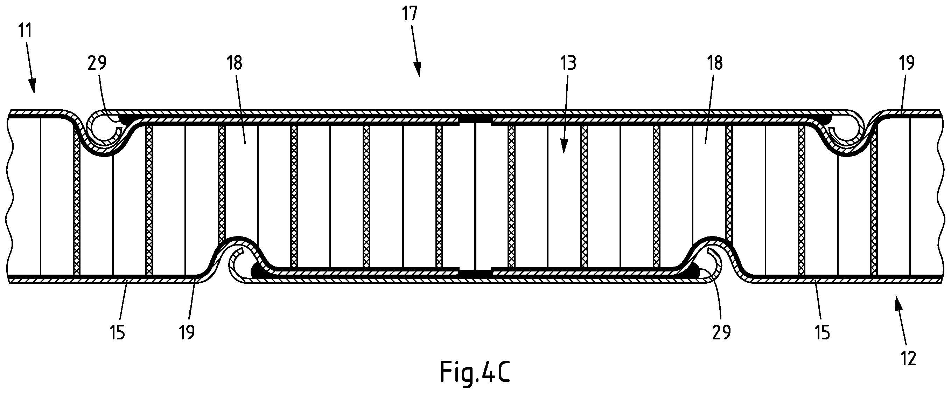

Auf diese Weise wird das in der Fig. 4C dargestellte Paneel 10 erhalten. Bei diesem Paneel 10 ist die innere Decklage 11 angrenzend an den Laderaum 3 des Nutzfahrzeugs 1 im Wesentlichen eben ausgebildet. Die äußere Decklage 12 ist analog angrenzend an die Außenseite des Nutzfahrzeugs 1 im Wesentlichen eben ausgebildet, und zwar auch im Verbindungsbereich 17 zwischen den Matrixelementen 18 und/oder den Decklagenelementen 15 der inneren Decklage 11 und/oder der äußeren Decklage 12.

### Bezugszeichenliste

- 1: Nutzfahrzeug
- 2: Kofferaufbau
- 3: Laderaum
- 4: Stirnwand
- 5: Dach
- 6: Seitenwand
- 7: Flügeltür
- 8: Rückwand
- 9: Ladeboden
- 10: Paneel
- 11: innere Decklage
- 12: äußere Decklage
- 13: Kernlage
- 14: Matrixstruktur
- 15: Decklagenelement
- 16: Spange
- 17: Verbindungsbereich
- 18: Matrixelement
- 19: Klebstoffschicht
- 20: Wabe
- 21: Umformwerkzeug
- 22: Rolle
- 23: Heizwerkzeug
- 24: Sicke
- 25: Umformbereich
- 26: Montageelement
- 27: Verbindungselement
- 28: Aussparung
- A: Abstand
- D_{M}: Dicke Matrixelement
- Ds: Dicke im Bereich der Sicke
- Z: Zugmaschine

## Patentansprüche

1. Verfahren zur Herstellung eines Paneels (10) eines Nutzfahrzeugs (1), insbesondere eines Lastkraftwagens, Anhängers oder Sattelaufliegers, insbesondere nach einem der Ansprüche 10 bis 15, umfassend eine innere strukturgebende Decklage (11), eine äußere strukturgebende Decklage (12) und eine zwischen der inneren Decklage (11) und der äußeren Decklage (12) vorgesehene Kernlage (13), wobei die Kernlage (13) wenigstens ein Matrixelement (18) aus einem thermoplastischen Kunststoff aufweist,
- bei dem das wenigstens eine Matrixelement (18) wenigstens abschnittsweise erwärmt wird,
- bei dem der erwärmte Abschnitt des wenigstens einen Matrixelements (18) mit wenigstens einem Umformwerkzeug (21) thermisch umgeformt wird,
- bei dem im Wege des thermischen Umformens abschnittsweise wenigstens eine Sicke (24) mit gezielt verringerter Dicke (Ds) des Matrixelements (18) im wenigstens einen Matrixelement (18) gebildet wird und
- bei dem das wenigstens eine thermisch umgeformte Matrixelement (18) mit der inneren strukturgebenden Decklage (11) und der äußeren strukturgebenden Decklage (12) verbunden wird.

2. Verfahren nach Anspruch 1,
- bei dem die wenigstens eine Sicke (24) mit einer gegenüber den nicht thermisch umgeformten Bereichen des wenigstens einen Matrixelements (18) um wenigstens 10%, vorzugsweise um wenigstens 15%, insbesondere um wenigstens 20%, verringerten Dicke (Ds) gebildet wird und/oder
- bei dem die wenigstens eine Sicke (24) mit einer gegenüber den nicht thermisch umgeformten Bereichen des wenigstens einen Matrixelements (18) um weniger als 50%, vorzugsweise um weniger als 40%, insbesondere um weniger als 30% verringerten Dicke (Ds) gebildet wird.

3. Verfahren nach Anspruch 1 oder 2,
- bei dem zum abschnittsweisen Erwärmen des wenigstens einen Matrixelements (18) das wenigstens eine Matrixelement (18) und wenigstens ein Heizwerkzeug (23) in einer Richtung wenigstens im Wesentlichen parallel zum wenigstens einen Matrixelement (18) relativ zueinander aneinander vorbeibewegt werden und/oder
- bei dem zum abschnittsweisen thermischen Umformen des wenigstens einen Matrixelements (18) das wenigstens eine Matrixelement (18) und wenigstens ein, vorzugsweise das Heizwerkzeug (23) umfassendes, Umformwerkzeug (21) in einer Richtung wenigstens im Wesentlichen parallel zum wenigstens einen Matrixelement (18) relativ zueinander aneinander vorbeibewegt werden.

4. Verfahren nach Anspruch 3,
- bei dem zum Bilden der wenigstens einen Sicke (24) im wenigstens einen Matrixelement (18) ein Umformwerkzeug (21) mit einem einen mit dem Querschnitt der Sicke (24) korrespondierenden Querschnitt aufweisenden Umformbereich (25) genutzt wird und/oder
- bei dem das Umformwerkzeug (21) beheizt wird und das Umformwerkzeug (21) wenigstens ein Matrixelement (18), vorzugsweise ausschließlich, zur thermischen Umformung erwärmt.

5. Verfahren nach einem der Ansprüche 1 bis 4,
- bei dem das wenigstens eine thermisch umgeformte Matrixelement (18) derart mit der inneren Decklage (11) und/oder der äußeren Decklage (12) verbunden wird, so dass die innere Decklage (11) und/oder die äußere Decklage (12) mit einem, insbesondere rippenförmigen, Montageelement (26), in die wenigstens eine Sicke (24) des Matrixelements (18) eingreift und
- bei dem, vorzugsweise, die wenigstens eine Sicke (24) des Matrixelements (18) durch die innere Decklage (11) und/oder der äußere Decklage (12) wenigstens im Wesentlichen ausgefüllt wird.

6. Verfahren nach einem der Ansprüche 1 bis 5,
- bei dem die innere Decklage (11) und/oder die äußere Decklage (12) aus mehreren überwiegend flächigen Decklagenelementen (15) zusammengesetzt wird und
- bei dem eine den Verbindungsbereich (17) aneinander angrenzender Decklagenelemente (15) überdeckende Spange (16) von außen in dem Verbindungsbereich (17) zugeordnete Montagelemente (26) der aneinander angrenzenden Decklagenelemente (15) eingesetzt wird.

7. Verfahren nach einem der Ansprüche 1 bis 6,
- bei dem im Wege des thermischen Umformens die Dicke (D_{M}) des wenigstens einen Matrixelements (18) entlang einer sich wenigstens im Wesentlichen über die gesamte Längserstreckung des Matrixelements (18) erstreckenden Sicke (24) verringert wird und
- bei dem, vorzugsweise, über wenigstens im Wesentlichen die gesamte Längserstreckung des Matrixelements (18) ein Montageelement (26) der inneren Decklage (11) und/oder der äußeren Decklage (12) in die Sicke (24) eingesetzt wird.

8. Verfahren nach einem der Ansprüche 1 bis 7,
- bei dem das wenigstens eine thermisch umgeformte Matrixelement (18) mit der inneren Decklage (11) und der äußeren Decklage (12) verklebt wird und
- bei dem, vorzugsweise, die innere Decklage (11) und die äußere Decklage (12) direkt über jeweils eine Klebstoffschicht (19) mit dem wenigstens einen Matrixelement (18) verklebt werden.

9. Verfahren nach einem der Ansprüche 1 bis 8,
- bei dem als das wenigstens eine Matrixelement (18) ein Matrixelement (18) mit einer Wabenstruktur umfassend eine Vielzahl, insbesondere sechseckiger, in einer Richtung wenigstens im Wesentlichen senkrecht zur inneren Decklage (11) und/oder zur äußeren Decklage (12) ausgerichteten, Waben (20) verwendet wird und/oder
- bei dem als das wenigstens eine Matrixelement (18) ein Matrixelement (18) wenigstens im Wesentlichen aus Polypropylen (PP) oder Polyethylenterephthalat (PET) verwendet wird.

10. Paneel (10) eines Nutzfahrzeugs (1), insbesondere eines Lastkraftwagens, Anhängers oder Sattelaufliegers, insbesondere hergestellt nach einem der Ansprüche 1 bis 9, umfassend eine innere strukturgebende Decklage (11), eine äußere strukturgebende Decklage (12) und eine zwischen der inneren Decklage (11) und der äußeren Decklage (12) vorgesehene Kernlage (13), wobei die Kernlage (13) wenigstens ein Matrixelement (18) aus einem thermoplastischen Kunststoff aufweist,
**dadurch gekennzeichnet, dass** das wenigstens eine Matrixelement (18) abschnittsweise wenigstens eine im Wege des thermischen Umformens gebildete Sicke (24) mit einer verringerten Dicke (Ds) des Matrixelements (18) gegenüber den nicht thermisch umgeformten Bereichen des wenigstens einen Matrixelements (18) aufweist.

11. Paneel nach Anspruch 10,
**dadurch gekennzeichnet, dass** ein, insbesondere rippenförmiges, Montageelement (26) der inneren Decklage (11) und/oder der äußeren Decklage (12) in die wenigstens eine Sicke (24) des Matrixelements (18) eingreift und dass, vorzugsweise, die wenigstens eine Sicke (24) des Matrixelements (18) durch die innere Decklage (11) und/oder der äußere Decklage (12) wenigstens im Wesentlichen ausgefüllt wird.

12. Paneel nach Anspruch 10 oder 11,
**dadurch gekennzeichnet, dass** die innere Decklage (11) und/oder die äußere Decklage (12) aus mehreren überwiegend flächigen Decklagenelementen (15) zusammengesetzt ist und dass wenigstens eine den Verbindungsbereich (17) aneinander angrenzender Decklagenelemente (15) überdeckende Spange (16) von außen in die dem Verbindungsbereich (17) zugeordneten Montagelemente (18) der aneinander angrenzenden Decklagenelemente (15) eingesetzt ist.

13. Paneel nach einem der Ansprüche 10 bis 12,
**dadurch gekennzeichnet, dass** das wenigstens eine Matrixelement (18) mit der inneren Decklage (11) und der äußeren Decklage (12), insbesondere direkt, über eine Klebstoffschicht (19) miteinander verklebt ist und/oder
dass aneinander angrenzende Decklagenelemente (15) abschnittsweise mit der die Decklagenelemente (15) verbindenden Spange (16), insbesondere direkt, über eine Klebstoffschicht (19) mit der Kernlage (13) verklebt sind.

14. Paneel nach einem der Ansprüche 10 bis 13,
**dadurch gekennzeichnet, dass** die wenigstens eine Sicke (24) mit einer gegenüber den nicht thermisch umgeformten Bereichen des wenigstens einen Matrixelements (18) um wenigstens 10%, vorzugsweise um wenigstens 15%, insbesondere um wenigstens 20%, verringerten Dicke (Ds) vorgesehen ist und/oder dass die wenigstens eine Sicke (24) mit einer gegenüber den nicht thermisch umgeformten Bereichen des wenigstens einen Matrixelements (18) um weniger als 50%, vorzugsweise um weniger als 40%, insbesondere um weniger als 30%, verringerten Dicke (Ds) vorgesehen ist und/oder
dass die wenigstens eine Sicke (24) wenigstens im Wesentlichen über die gesamte Höhe oder Breite des Paneels (10) vorgesehen ist und/oder dass das wenigstens eine Montageelement (26) der inneren Decklage (11) und/oder der äußeren Decklage (12) wenigstens im Wesentlichen über die gesamte Höhe des Paneels (10) vorgesehen ist.

15. Paneel nach einem der Ansprüche 10 bis 14,
**dadurch gekennzeichnet, dass** das wenigstens eine Matrixelement (18) eine Wabenstruktur umfassend eine Vielzahl von, insbesondere sechseckigen, in einer Richtung wenigstens im Wesentlichen senkrecht zur inneren Decklage (11) und/oder zur äußeren Decklage (12) ausgerichtete Waben (20) aufweist und/oder
dass das wenigstens eine Matrixelement (18) wenigstens im Wesentlichen aus Polypropylen (PP) oder aus Polyethylenterephthalat (PET) gebildet ist.
